Europäisches Patentamt

European Patent Office

Office européen des brevets

(11) Publication number: **0 152 778**
**B1**

## EUROPEAN PATENT SPECIFICATION

(45) Date of publication of patent specification: 07.06.89

(51) Int. Cl.⁴: **B 23 P 19/02**

(21) Application number: 85100570.2

(22) Date of filing: 21.01.85

(60) Divisional application 88111679 filed on 20.07.88.

(54) Sleeving of tubes of steam generator in hostile environment.

(30) Priority: 14.02.84 US 580038

(43) Date of publication of application:
28.08.85 Bulletin 85/35

(45) Publication of the grant of the patent:
07.06.89 Bulletin 89/23

(84) Designated Contracting States:
BE CH DE FR GB IT LI SE

(56) References cited:
DE-A-2 311 688
DE-C-1 232 413
FR-A-2 529 109

(73) Proprietor: **WESTINGHOUSE ELECTRIC
CORPORATION**
**Westinghouse Building Gateway Center**
**Pittsburgh Pennsylvania 15235 (US)**

(72) Inventor: **Cooper, Frank William, Jr.**
**115 Himalaya Road**
**Monroeville Pennsylvania 15146 (US)**
Inventor: **Howard, Bruce Arthur**
**9110 118th Way**
**Seminole Florida 33540 (US)**

(74) Representative: **Patentanwälte Dipl.-Ing. R.
Holzer Dipl.-Ing. (FH) W. Gallo**
**Ludwigstrasse 26**
**D-8900 Augsburg (DE)**

Courier Press, Leamington Spa, England.

## Description

This invention generally relates to the nuclear reactor art. It has particular relationship to the repair of the damaged, cracked or corroded tubes of a steam generator of a nuclear reactor plant. As known in prior art, the repair of the damaged tubes is effected by inserting sleeves in the tubes and providing metallically sealed joints between the sleeves and the sleeved tubes. To carry out this operation, an operator must usually enter the channel head of the steam generator and set the sleeves for a sleeving operation. The environment within the channel head is radioactive. Extensive studies have shown that the task which the operator must perform during sleeve insertion renders this process the most radiation-exposure-intensive operation within the overall sleeving process. In one particular process, the sleeve blanks are inserted in the tubes one at a time. While such process is generally highly satisfactorily, its ability to carry out only one sleeve insertion operation at a time constitutes a disadvantage. For each sleeving operation, an operator must expose himself to radioactivity by entering the channel head to position a sleeve blank and the mandrel on a sleeve inserter and otherwise to adjust or to set the sleeve inserter. Even though no prior art of record relating to the subject matter is scarce, one particular publication dealing with pre-bent tubes used for sleeving operation may be noted in the context of this invention; FR—A—2 529 109 (US—A—4 685 186) teaches using pre-bent tubes in the shape of an arc of known curvature, so that they can be conveniently handled in a plenum of similar curvature in the channel head of a nuclear steam generator. However, the present tubes used for purposes of sleeving are straightened out by using a set of rollers, just before the point of entry of the sleeve into the steam generator tube. Prior art arrangements are associated with inadequacies and undesirable exposure of service personnel to radiation.

It is an object of this invention to minimize the exposure of personnel to radioactivity on the sleeving of damaged, cracked or corroded tubes of a steam generator of a nuclear-reactor plant and to provide a method for accomplishing this purpose.

The invention in its broad form resides in a method of sleeving a damaged tube in a steam generator of a nuclear-reactor plant, said tube being linear, said method comprising the steps of: producing curvature in a sleeve blank of resilient material to be inserted as a sleeve into said tube, said curvature being so small as to permit the insertion of the blank into said linear tube, engaging the lower end of said blank and advancing said blank into said tube while applying sufficient thrust to overcome resistance offered by the blank to insert said blank into said tube notwithstanding its curvature so that said blank forms a sleeve in said tube, whereby as a result of the curvature in said blank the sleeve is held firmly in said tube by the restoring forces exerted by said tube, and disengaging the lower end of said sleeve.

In a preferred embodiment described herein, a cartridge sleeve blank loader is provided which not only limits the exposure of personnel to radioactivity but also materially increases productivity. The cartridge sleeve-blank loader includes a main framework. A sleeve-blank turret or drum is readily positioned on, and readily removable from, the framework in a short time. The turret has a plurality of receptacles typically as many as 24 in which about 22 sleeve blanks are typically loaded. The framework also supports a sleeve-blank lifter which includes a vertically movable carriage carrying a lift bar. The carriage is driven vertically, typically by a low voltage electric motor, through a screw and ball nut. The lift bar engages the sleeve blank in a receptacle at a loading position and inserts the sleeve blank into a tube below which the lifted sleeve blank is centered. Successive receptacles, each carrying a sleeve blank, are indexed into the inserted position of the turret and inserted into corresponding tubes.

Typically, the sleeve blanks are composed of Inconel (trademark) alloy. Typical sleeve blanks that are in use are a bimetallic sleeve blank composed of Inconel 625 and Inconel 690 annuli and a sleeve blank composed only of Inconel 690 or Inconel 600 (trade names). The lengths of the sleeve blanks are typically 90 cm, 1 meter or 105 cm (36", 40" or 42"). The cartridge sleeve-blank loader in accordance with this invention does not include an expander. Friction between the sleeve and the sleeved tube is relied upon to hold the sleeve when the lifter is retracted. The sleeve blanks are, in the practice of this invention, slightly curved lor bowed. Typically, a bimetallic sleeve blank 1 meter (40") long is bowed by 2 mm±0.5 mm at the longitudinal center or at the point of maximum departure from linearity. A sleeve blank 1 meter (40") long of Inconel 690 alone is typically bowed 1.5 mm±0.5 mm at the longitudinal center or at the point of maximum departure from linearity. The tubes which are sleeved are linear so that when a bowed sleeve blank is thrust into a tube, the tube exerts a force tending to straighten the sleeve blank. The sleeve then exerts a restoring force against the wall of the sleeved tube so that the sleeve is firmly held in the tube and does not fall out when the lift bar is retracted. To preclude damage to a sleeve blank by axial or lateral contact with the tube sheet, the sleeve blank is initially advanced towards the tube sheet by the lifter at a low speed, typically 25 mm to 75 per second. Once the sleeve blank enters the tube, the speed is substantially increased, typically to 100 mm to 150 mm per second.

The cartridge sleeve-blank loader may be mounted on a coordinate transport; the loader may be provided with lockpins which are engaged in tubes that are so located near the tube to be sleeved that a sleeve blank in the sleeving position would be centered under the tube to be sleeved. The tubes may be regarded as arrayed in rows and columns or lines. Typically, the tubes in the rows may be aligned. Each set directly along a column or the tubes in each row may be staggered with respect to the tubes in the just preceding and/or just succeeding row. The lockpins are adjustable so that the center line between the axes of the pins are parallel to the rows where the tubes are not staggered and parallel to the columns where the tubes are staggered. The coordinate transport has the facility for affording precise setting of the sleeve-blank loader as its carriage is moved from position to position for successive sleeving of tubes with the sleeves in the turret. In the practice of this invention, the turret is loaded with sleeve blanks in an assembly area outside of the radioactive channel head. An operator or attendant then enters the channel head and quickly removes an empty turret whose sleeve blanks have been inserted from a cartridge sleeve-blank loader mounted on the coordinate transport. The loaded turret is then handed to the attendant and he quickly installs the loaded turret in the cartridge loader, sets the loader for unloading the loaded turret and leaves the channel head. A handle assembly uniquely suitable for quick positioning of a turret in the sleeve-blank loader is provided.

A more detailed understanding of the invention may be had from the following description of a preferred embodiment, given by way of example and to be studied in conjunction with the accompanying drawing wherein:

Figure 1 is a view in longitudinal section of apparatus with which the method of this invention is practiced;

Figure 2 is a view in transverse section taken along line II—II of Fig. 1;

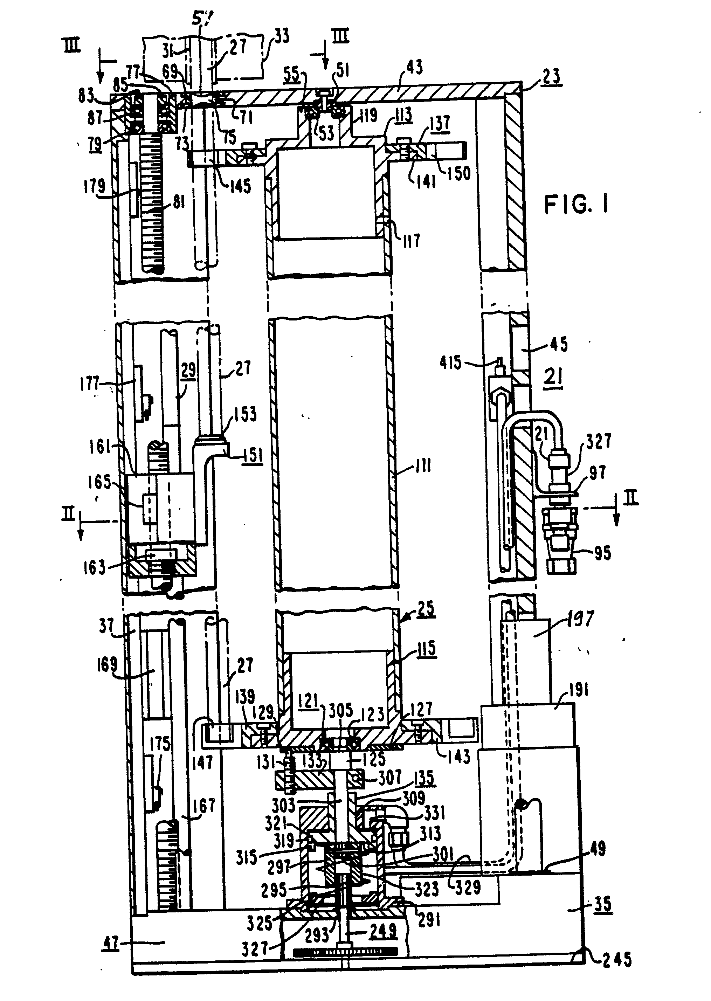

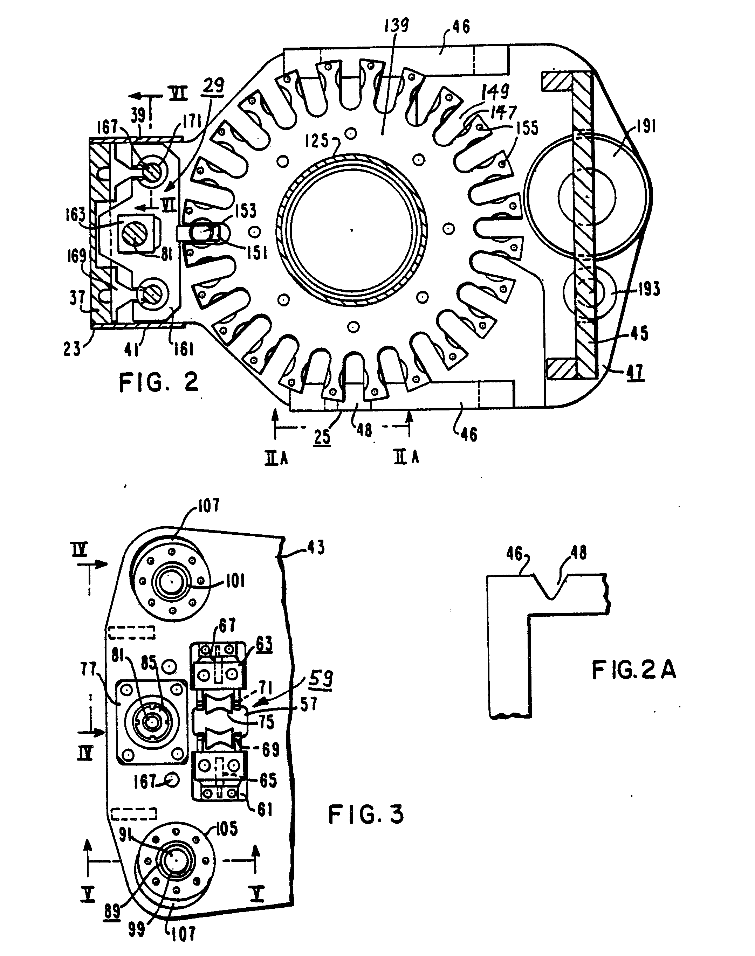

Fig. 2 is a fragmentary view taken in the direction IIA—IIA of Fig. 2 showing a feature of the handle with which the cartridge in Fig. 1 is provided;

Fig. 3 is a partial plan view taken in the direction III—III of Fig. 1;

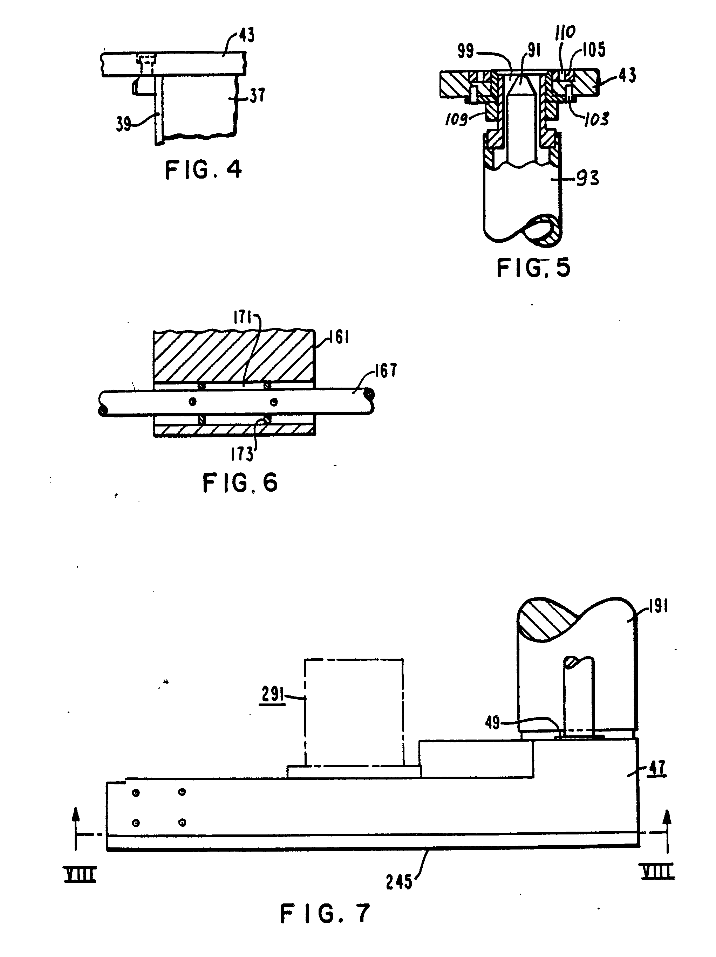

Fig. 4 is a fragmental view in side elevation taken in the direction IV—IV of Fig. 3;

Fig. 5 is a fragmental view in longitudinal section taken in the direction V—V of Fig. 3;

Fig. 6 is a fragmental view in longitudinal section taken in the direction VI—VI of Fig. 2;

Fig. 7 is a fragmental view in side elevation showing the gear box of the apparatus;

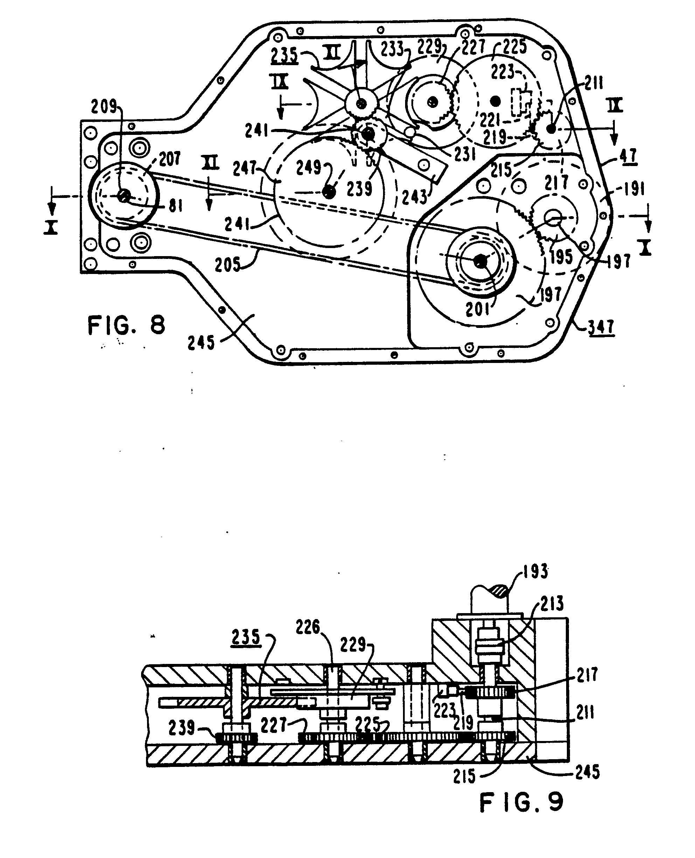

Fig. 8 is a view in transverse section taken along line VIII—VIII of Fig. 7;

Fig. 9 is a fragmentary view in longitudinal section taken along line IX—IX of Fig. 8;

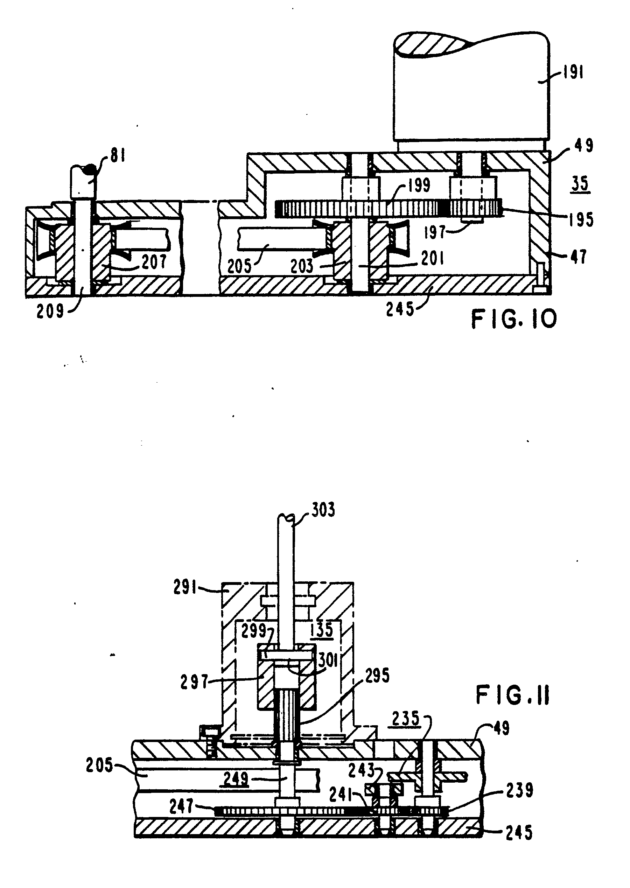

Fig. 10 is a fragmentary view in longitudinal section taken along line X—X of Fig. 8;

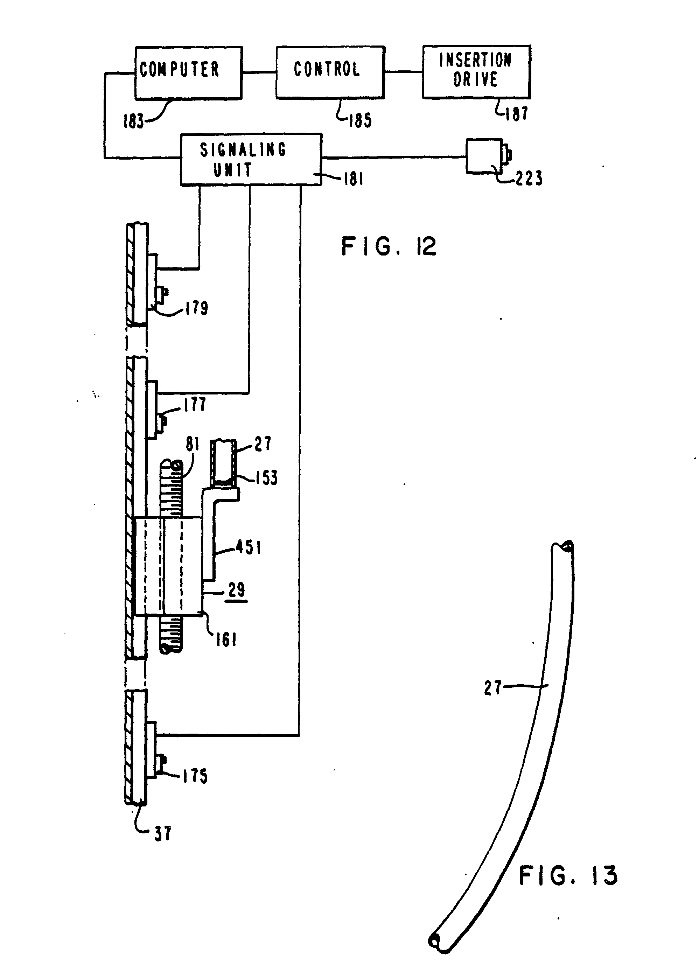

Fig. 11 is a fragmentary view in longitudinal section taken along line XI—XI of Fig. 8;

Fig. 12 is a block diagram showing the manner in which the lifter controls the turret drive;

Fig. 13 is a view in side elevation of a sleeve blank used in the practice of this invention;

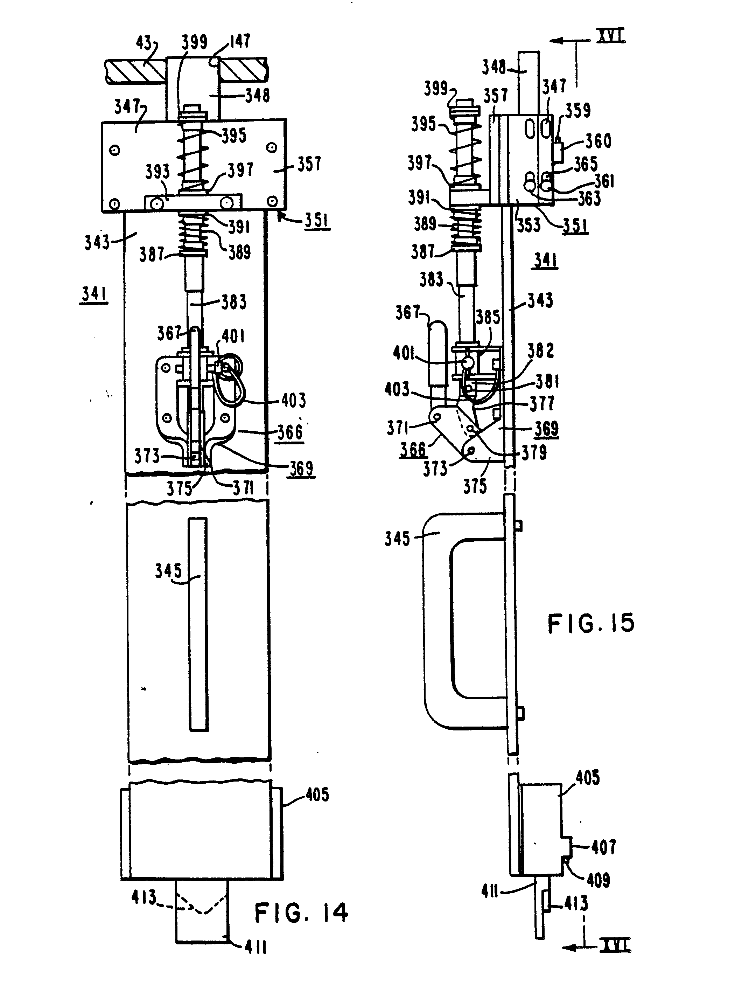

Fig. 14 is a plan view of a handle assembly for transferring the turret to the channel head and for readily, quickly, and properly positioning the turret in operating position on the cartridge sleeve-blank loader;

Fig. 15 is a view in side elevation of the handle assembly taken in the direction XV—XV of Fig. 14;

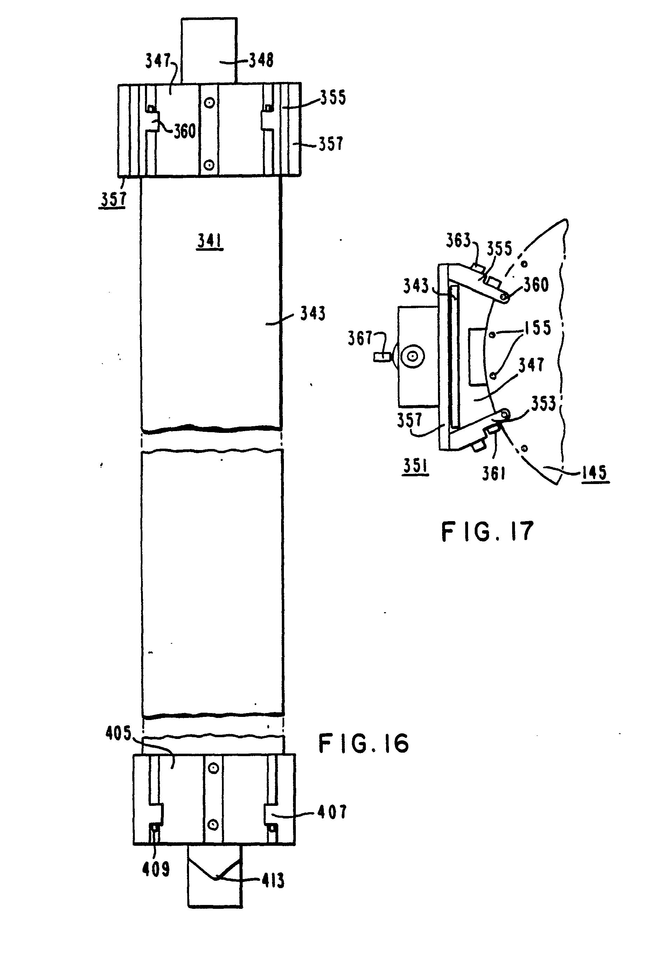

Fig. 16 is a view in end elevation of the handle assembly taken in the direction XVI—XVI of Fig. 15; and

Fig. 17 is a plan view of the bottom of the handle assembly taken in the direction XVII—XVII of Fig. 16.

The apparatus shown in the drawings is a cartridge sleeve-blank loader 21. The sleeve-blank loader includes a supporting framework 23, a readily removable and replaceable turret or drum 25 for the sleeve blank 27, a lifter 29 for raising the sleeve blanks 27 and inserting them into cracked or corroded or otherwise damaged tubes 31 in the tube sheet 33 of a steam generator of a nuclear-reactor plant and a drive 35 for the lifter 29 and for indexing the turret 25. In Fig. 1 a part of a sleeve blank 27 is shown in Fig. 1 in the turret in broken lines on the right and a sleeve blank is also shown in broken lines on the lifter 29 which is partly raised.

The framework 23 includes a front plate 37, side plates 39 and 41 (Fig. 2), a top plate 43 and a rear plate 45. The framework 23 is seated on the gearbox assembly 47 of the drive 35. The top cover 49 is secured to the back plate 45. As shown in Fig. 2 the front plate 37 and the side plates 39 and 41 of the framework 23 form a cavity which encloses the lifter 29 on three sides. The turret 25 extends rearwardly of this part of the framework from the open side to the rear plate 45. The sleeve-blank inserting position of the turret 25 is centered outwardly of this opening (Fig. 2). Handles 46 (Figs. 2, 3) for manipulating the sleeve-blank loader 21 are supported on the cover 49 of the gearbox assembly 47 a short distance above the cover. Each handle has a V-groove 48 (Fig. 2A) which serves in the ready positioning of a turret 25 in the loader 21.

At the center of the top plate, the upper pivot 51 for the turret 25 is secured. The pivot 51 has a shoulder which seats the inner race 53 of the upper thrust bearing 55 of the turret 25 when the turret is properly positioned in the apparatus.

The top plate 43 also has an opening 57 (Fig. 3) through which the sleeve blanks 27 are thrust by the lifter 29. Upwardly of the top plate 43, a roller guide assembly 59 for the sleeve blanks extends over the opening 57. The assembly 59 includes oppositely disposed brackets 61 secured to the top plate 43. On each bracket a clevis 63 is slidably mounted. Each clevis 63 is connected to its bracket 61 by a dowel pin 65 which permits horizontal movement of the clevis. There is a coil spring 67 about each pin 65. The coil spring 67 engages opposite surfaces of the bracket 61 and clevis 63 urging the clevis inwardly towards the opening 57. A bearing pin 69 is secured by dowel pins 71 to the arms 73 of each clevis 63. Grooved rollers 75 are rotatable on the bearings. The sleeve blank 27 as it is passed through opening 57 is firmly engaged and guided by the rollers 75 as they are urged towards each other by the springs 67.

A hollow-flanged bracket 77 (Fig. 3) extends into an opening in the top plate 43 centrally disposed with respect to the front plate. The bracket 77 is secured to the top plate 43. Tapered roller bearings 79 (Fig. 1) for the drive screw 81 of the lifter 29 extend into bracket 77. The bearings 79 are secured between a shoulder on the screw 81 and a lock washer 83 held by a bearing screw 85 against the rotating race 87 of the upper bearing.

Lockpin assemblies 89 are suspended from the top plate 43 symmetrically with respect to the center line perpendicular to the front plate 37. The lockpin assemblies and their mountings are disclosed in detail in US—A—4586250. Each lockpin assembly 89 includes a lockpin 91 (Fig. 5) movable upwardly into a selected tube 31, properly positioned with respect to a tube to be sleeved, and retractable downwardly by a piston not shown in a cylinder 93. The hydraulic fluid for moving the piston is supplied through a fitting 95 (Fig. 1). The fitting 95 is suspended from an angle bracket 97 connected to the back plate 45. The cylinder 93 is suspended from a flanged support 99 screwed into a flanged sleeve 101 secured to top plate 43 by locating pins 103 in the underside of the plate. The flanged sleeve 101 is screwed into a ring 105 appropriately positioned in the oval cavity 107 (Fig. 3) in the top plate. Two sets of locating holes for the pins 103 are provided. With the pins 103 in one set of holes, the ring 105 is seated in the left-hand end of the cavity with reference to Fig. 3 as shown. With the pins 103 in the other set, the ring 105 is seated in the righthand end of the cavity 107 with reference to Fig. 3. The member 99 and the cylinder 93 suspended from it are locked to the sleeve 101 and the top plate 43 by a nut 109 screwed onto the member 99 and firmly engaging the flange of the sleeve 101. The holes 110 serve for engagement by a wrench to disconnect the lockpin assembly 89 from the plate 43.

The turret 25 (Fig. 1) includes a cylinder 111. Flanged end caps 113 and 115 are secured to the upper and lower ends of cylinder 111 by a plurality of uniformly spaced spring pins 117. The upper end caps has a central shouldered extension 119 in whose shoulder the upper thrust bearing 55 is secured. The lower end cap 115 has a shouldered opening in whose shoulder the lower thrust bearing 121 is secured. When the turret 25 is positioned in the apparatus, the inner race 123 of bearing 121 engages a shoulder on the lower pivot 125. A plate 127 is secured to the lower end of the lower end cap 115 engaging a shoulder depending from the lower end. The plate 127 has a spherical groove which is engaged by a ball (not shown) in a spring-activated plunger 129 extending from a sleeve 131 secured in the torque arm 133 of the indexing drive-shaft assembly 135. The turret 25 is indexed by the plunger 129 when the torque arm 135 is rotated. Upper and lower index plates or rings 137 and 139 are bolted to the flanges 141 and 143 of the end caps 113 and 115. The bottoms of the index plates are flush with the bottoms of the flanges. A plurality of holes 145 defined by circularly cylindrical arcs are provided in the upper index plate 137. Cavities 147 defined by circularly cylindrical arcs are provided in the lower index plate 139. The cavities 147 in the lower index plate 139 face upwardly. The holes 145 and cavities 147 at each angular position of the turret are coaxial and serve as a receptacle for a sleeve blank 27. Each cavity 147 engages the lower end of a sleeve blank. Slots 149 (Fig. 2) extend through each cavity 147. Slots 150 also extend through each hole 145. The slots are penetrable by the lifting arm 151 of the lifter 29. The lifting arm 151 has a projection 153 which engages the lower end of a sleeve blank 27 in a receptacle 145—147. To facilitate the lifting operation, the lower end of each sleeve blank is flared. The index plates 137 and 139 have holes 155 around their periphery for engagement by the handle assembly 341 for handling the turret during installation.

The lifter 29 includes, in addition to the drive screw 81, the bearings 79, the bearing nut 83, and the lifter arm 151, a saddle block or carriage 161 (Figs. 1, 2). The saddle block 161 is hollow and within the saddle block a ball nut 163 is secured to a block 165 connected to the carriage. As the drive screw 81 is rotated in one direction or the other, the ball nut 163 is moved upwardly or downwardly carrying the saddle block 161 with it. The lifter arm 151 is supported from the surface of the saddle block which faces the turret 25. The lifter arm 151 is of generally L-shaped longitudinal cross section with the projection 153 on its horizontal surface. The saddle block 161 is guided by shafts, bars or rails 167. The shafts 167 extend between the upper plate 49 of the gearbox 47 and the top plate 43 of the gear box 47. The shafts 167 are supported by rail supports 169 mounted on the front wall 37 of the framework 23. The saddle block 161 carries ball bushings 171 (Figs. 2, 6) which engage and move along the shafts when the saddle block moves upwardly or downwardly. Each bushing 171 is provided with a seal 173 at each end. The bushings 171 have slots so that they clear the rail supports 169 as the bushings move upwardly or downwardly with the saddle block 161. Limit switches 175, 177 and 179 mounted inwardly along the front plate 37 are actuable by the saddle block 161. When the saddle block is in the lowermost position, it actuates limit switch 175 to indicate that it is in this position. When the saddle block is in the uppermost position, it actuates limit switch 179. When the saddle block is in a position such that the sleeve blank 27 has just entered the tube 31 to be sleeved, it actuates limit switch 177. Typically, limit switches 175, 177, 179 are microswitches which are closed by engagement with the saddle block 161 and reopen automatically when disengaged.

The limit switches 175, 177, 179 are connected to a signalling unit 181 (Fig. 12) which transmits intelligence as to the position of the saddle block 161 and sleeve blank 27 which it carries to a computer 183. Through a control 185, the computer 183 sets the insertion drive 187 to operate in dependence upon the position of the saddle block. At the start of an advance of a sleeve blank, the insertion speed is low so that the sleeve blank 27 is advanced at a low speed. When limit switch 77 is actuated, indicating entry of the sleeve blank into tube 31, the speed of the insertion drive 187 is increased substantially increasing the speed of insertion. When the limit switch 179 is actuated, the insertion drive is stopped and after a short delay, reversed. When switch 177 is actuated on the retraction stroke, the speed of the insertion drive 187 is reduced.

The drive 35 includes, in addition to the indexing shaft assembly 135, the torque arm 133 and the sleeve 131 and plunger 139, a sleeve-blank insertion motor 191 and an indexing motor 193 (Figs. 1, 2, 7—11). The motors 191 and 193 are mounted on the top cover 49 of the gearbox 47. The sleeve-blank insertion motor 191 drives a pinion 195 through its shaft 197. The pinion 195 meshes with a speed reducing gear 199 on whose shaft 201 a sprocket wheel 203 is mounted. A timing belt 205, driven by sprocket wheel 203, drives the drive screw 81 through a sprocket wheel 207 keyed to the shaft 209 of drive screw 81. Typically, the speed of the motor 191 is varied by varying the voltage impressed on this motor. Typically, with a voltage of 20 volts impressed on the motor, the sleeve blank is advanced at a velocity of 2″ per second and with 40 volts on the motor 191, the sleeve blank is advanced at 3.6″ per second.

A shaft 211 is driven by the indexing motor 193 through a multi-jaw coupling 213. The shaft 213 drives a pinion 215 and a cam 217. The cam has a flat surface over about 135° of its circumference (Fig. 8) and a cylindrical surface over the remainder of its circumference. The cam is engaged by a cam follower 219 on the switch arm 221 of a limit switch 223 suspended from the bottom of top plate 49 of the gearbox 47. When the cam follower 219 engages the flat surface, the arm 221 is moved counterclockwise closing the switch. When the cam follower is in the cylindrical part of the cam surface, the arm 221 is pivoted clockwise and the switch is open. The pinion 215 meshes with an idler gear 225. The idler gear 225 drives a gear 227 at the same speed of rotation as the pinion 215.

The cam 229 of the Geneva movement 231 is on the shaft 226 of gear 227. The cam 229 carries a pin 231 which, as the cam rotates, engages successively in the slots 233 of the star gear 235 of the Geneva movement indexing the star gear. On the shaft 237 of the star gear 235 there is a pinion 239 which meshes with an idler gear 241. The idler gear 241 is supported on a bracket 243 secured to the base 245 of the gearbox. The idler gear 241 meshes with a speed-reducing gear 247 which drives a shaft 249. The shaft 249 drives the indexing shaft assembly 135. The train of gears 215, 225, 227, 235, 241 and 247 are such that the shaft 249 is indexed one step for each complete rotation of gear 251 and cam 217. Limit switch 223 is actuated once for each indexing step of the shaft 249 and the turret 25. Actuation of the switch 223 transmits intelligence to computer 183 that an indexing operation has been completed. The shaft 249 is centered under the insertion position of the turret 25.

The index shaft assembly 135 (Figs. 1, 11) includes a circularly cylindrical flanged housing 291. The housing is seated on the top plate 49 of the gearbox 47 with its heel-like projection engaging a circular shoulder in the surface of top 49. The shaft 249 passes through a bearing 293 in the top 49 and terminates in a splined extension 295 which extends into the housing 291. The extension 295 is engaged by a splined bushing 297. The splined bushing 297 is connected by a pin 299 to the splined extension 301 of a shaft 303. The lower pivot 125 is secured to the top of shaft 303 by a central screw 305. The torque arm 133 is split at the end remote from the sleeve 131 and is clamped to the top of shaft 303 by screw 307. The assembly 135 also includes a piston 309. The shaft 303 extends through bushings in a central opening in the piston 309. The upper surfaces of the bushing 297 and of the splined section 301 are flush and they abut a spacer 313 abutting the inner surface of the flange 315 of the piston 309. There are O-ring seals 317 and 319 between the stem 319 of the piston and the inner surface of the top of housing 291 and between a peripheral slot 321 in the piston 309 and the lower wall of the housing 291. The piston 309 is urged upwardly by a spring 323 which is compressed between a shouldered annulus 325 supported on a ring 327 secured near the bottom of the inner wall of housing 291 and the bottom surface of the piston 309. The upper turn of the spring 323 is seated in the annular space between an annular tip of the piston and the outer surface of the splined bushing 297. Under the upward force of spring 323, the piston 309 maintains the parts connected to it, including the shaft 303 and its splined section 301, the bushing 297, the torque arm 133, the plunger 29 and the lower pivot 125 in the uppermost position. The pivot 125 is urged into firm locked engagement with thrust bearing 121 securing the turret 25 in its operating position. The upward force of the spring 323 is counteracted by compressed air supplied through fitting 327, conductor 329 and nozzle 331 to the top of the flange 315 of the piston. Fitting 327 is supported on angle bracket 97. When the compressed air is supplied, the force of spring 323 is counteracted and the piston 309 and the parts connected to it are moved downwardly disconnecting lower pivot 125 from thrust bearing 121 so that the turret 25 may be readily removed. When the compressed air is interrupted, the piston 309 and the parts connected to it snap upwardly and the pivot 125 is snapped into firm engagement with the thrust bearing 121 of a turret 25 which is positioned for operation. The indexing shaft indexes the turret through splined bushing 297, splined section 301, torque arm 133, plunger 129 and plate 127.

The handle assembly 341 is attached to a turret 25 loaded with sleeve blanks 27. As so loaded, it is handed to the attendant in the channel head of the steam generator to be sleeved. The attendant uses the handle assembly 341 to position the turret 25 in the cartridge sleeve-blank loader 21. Once the turret is properly positioned, it is locked and the handle assembly is removed.

The handle assembly 341 includes a supporting plate 343. A handle 345 is secured longitudinally of the plate 343 in a position where the handle may be readily grasped to manipulate the turret 25. There may be several handles but only one is shown in the drawings.

At the end of the handle assembly 341, as seen in Figs. 14, 15, 16, 17, a yoke 347 is secured to plate 343. The inner surface 349 (Fig. 17) of the yoke 347 has the contour of an arc of a circle having a slightly greater radius than the periphery of the upper index plates 145 so that it seats snugly against this plate. A top key 348 extends from the yoke 347. A slide assembly 351 is bolted to the inclined sides of the yoke 347. The slide assembly 351 includes two end slides 353 and 355 connected by a tie plate 357. Each of the slides 353 and 355 has a pin 359 extending from a projection 360 at its outer end. The pins 359 are sometimes referred to and may be described as plungers. The bolts 361 and 363 which join the slide assembly 351 to the yoke 347 pass through slots 365 (Fig. 15) in the slides so that the slide assembly is slidable relative to the yoke 347. The slide assembly 351 is slid longitudinally of plate 343 by operation of a mechanism 366 including a handle 367. The handle 367 is sometimes referred to as a plunger clamp since it clamps the plungers 359 in advanced and retracted positions. Handle 367 operates through a linkage mounted on bracket 369 secured to plate 343. A pair of parallel plates 371 extending from the inner end of handle 367 are pivotal about a pin 373 secured between parallel arms 375 of bracket 369. A lever 377 is pivotal near one end on a pin 379 extending between plates 371. Near the other end this lever 377 is pivotal on a pin 381 secured to the bifurcated end 382 of a shaft 383. The shaft is slidable in a bearing 385 extending from bracket 369. At its outer end the shaft 383 carries a retainer 387 for a spring 387. The spring 389 is compressible by the shaft 383 between the retainer 387 and a retainer 391 which is secured to a spring support 393 connected to tie plate 357. The shaft 383 passes through the retainer 391, the spring support 393 and through a second spring 395. The second spring 395 extends between retainer 397, secured to the spring support 393 on the face opposite to the retainer 391, and retainer 399. With the handle 367 in its most clockwise position with reference to Fig. 15, the slide assembly 351 is in its most advanced left-hand position on yoke 347 with reference to Fig. 15, and the pins 359 on the slides 353 and 355 are extended. With the handle 367 rotated to its most counterclockwise position with reference to Fig. 15, the slide assembly 351 is retracted to the right and the pins 359 are retracted. The springs 389 and 395 are so related that the shaft 383 passes through dead center in its advanced or retracted positions. The shaft 383 and the slide assembly 351 connected to it are locked in their extreme positions by a pin 401 connected to a cable 403 extending from bracket 369.

At its other end, support plate 343 carries a block 405 having projections 407 from which pins 409 extend. A key 411 extends from the end of block 405.

Displaced from the end of the key 411, there is a V-projection 413 shaped to seat in the V-groove 48 of one of the handles 46. The block 405 is shaped, similarly to the yoke 347, so that it seats against the periphery of the lower index plate 147.

In the practice of this invention, the handle assembly is connected to a turret 25 carrying sleeve blanks 27 in its receptacles. The circular arcuate surface (not shown) of the block 405 is seated against the coaxial circular surface of the lower index plate 139 and the pins 409 are inserted in holes 155 along the periphery of the index plate 139. Typically, the two pins 409 are inserted in the two end holes of a sequence of four holes. Initially, the handle 367 is locked in the most counterclockwise position, with reference to Fig. 15. Once the pins 409 are seated in the holes 155 of the lower index plate 139, the handle assembly 341 is swung to the position in which the surface 349 is seated in the circular rim of the upper index plate 137 with the pins or plungers 359 aligned with the first and the fourth holes 155 of a sequence of four holes. The shaft 383 is now unlocked by removal of the pin 401 from the bearing 385 and the handle 367 is turned in a clockwise direction injecting the pins or plungers 359 in the two holes 155 of the index plate at the ends of a sequence of four. The pin 401 is inserted in bearing 385 to lock the handle assembly 341 in the position in which it is mounted on the sleeve-blank loaded turret 25. The loading of turret 25 and the mounting of the handle assembly takes place outside of the channel head of the steam generator.

The attendant now enters the channel head. By setting the valve 415 (Fig. 1) in the open position, the attendant applies compressed air to piston 315. The piston 315 and the shaft 303, the torque arm 133 and the lower pivot 125 are retracted. The unloaded turret 25 is readily removable and is removed by the attendant and given to personnel outside of the channel head. The valve 415 is left in the open setting. The personnel outside of the channel head now give the loaded turret to the attendant. Grasping the handle 345, the attendant inserts to top key in a slot 417 (Fig. 14) in the top plate of the sleeve-blank loader 21, engages the bottom key 411 with the side of the handle 46 (Fig. 2) just below the slot 417 and seats the projection 413 in the V-notch 48 of the handle 46. Slots 417 are associated with the handles 46 on both sides of the sleeve-blank loader 21 (Fig. 2) so that the handle assembly 341 may be mounted either on the left or on the right, with reference to Fig. 2 of the loader 21. This is a significant feature because it gives the attendant flexibility to enable him to manipulate the handle assembly 341 on the right or left of the loaded turret. This flexibility is necessary because of the space limitations in the channel head which is in the shape of a spherical dome. After the turret 25 is positioned in the sleeve-blank loader as just described, the attendant closes valve 415 disconnecting the compressed air. Under the action of spring 323, the lower pivot 125 is snapped into bearing 121 locking the turret firmly in the loader 21. The attendant then swings the handle 367 to the most counterclockwise position and removes the handle assembly. The attendant now leaves the channel head and the sleeving proceeds automatically. The time spent within the channel head by the attendant in completing this task is typically about 75 seconds.

While a preferred embodiment and preferred practice of this invention have been disclosed herein, many modifications thereof are feasible.

## Claims

1. A method of sleeving a damaged tube of a steam generator of a nuclear-reactor plant, said tube being linear; said method comprising the steps of producing curvature in a sleeve blank of resilient material to be inserted as a sleeve into said tube, said curvature being so small as to permit the insertion of the blank into said linear tube, engaging one end of said blank and advancing said blank into said tube with the opposite end of said blank leading while applying sufficient thrust to said blank through said one end to insert said blank into said tube, notwithstanding its curvature, so that said blank forms a sleeve in said tube, whereby, as a result of the curvature in said blank the said sleeve is held firmly in said tube by the restoring forces exerted by said blank, and disengaging the lower end of said sleeve.

2. The method as in claim 1 further comprising: advancing a sleeve blank from an initial position in which the sleeve blank is spaced from said tube to a position in which said sleeve blank is fully inserted in said tube as a sleeve, further comprising advancing said sleeve blank at a lower speed, so as to preclude damage to the tube blank by undesirable contact with the tube sheet, until the sleeve blank enters said tube, then advancing said sleeve blank into said tube at a higher speed until said sleeve blank is fully inserted in said tube.

3. The method of claim 2 for sleeving tubes that are linear including the step of producing a curvature in the sleeve blank before advancing said sleeve blank at the low speed.

4. The method of claim 1 wherein the curvature is slight but effective to permit insertion of the blank in the tube and securing of said blank in said tube.

5. The method of claim 1 wherein the curvature in the sleeve blank is produced by bowing the sleeve blank, a sleeve blank 100 cm (40 inches) in length being bowed by between 0.1 cm and 0.25 cm (0.040 inch and 0.100 inch) at a point of maximum departure.

6. The method of claim 1 wherein the sleeve blank is advanced toward the tube at a lower speed until said sleeve blank enters the tube and thereafter said sleeve blank is advanced into the tube at a substantially higher speed until it is inserted in the tube.

## Patentansprüche

1. Verfahren zum Vermuffen eines beschädigten Rohres eines Dampferzeugers einer Kernkraftanlage, wobei das Rohr geradlinig ist, mit den Schritten: Herstellen einer Krümmung in einem als Muffe in das Rohr einzuführenden Muffenrohling aus elastischem Material, wobei die Krümmung so klein ist, daß sie das Einführen des Rohlings in das geradlinige Rohr ermöglicht, Erfassen eines Ende des Rohlings und Vorschieben des Rohlings in das Rohr mit führendem anderem Ende des Rohlings, während über das eine Ende ausreichende Schubkraft zum Einführen des Rohlings in das Rohr trotz seiner Krümmung auf den Rohlings ausgeübt wird, so daß der Rohling eine Muffe in dem Rohr bildet, derart, daß infolge der Krümmung des Rohlings die Muffe in dem Rohr durch die von dem Rohling ausgeübten Rückstellkräfte fest in dem Rohr gehalten wird, und anschließendes Lösen des unteren Endes der Muffe.

2. Verfahren nach Anspruch 1, das weiter umfaßt: Vorschieben eines Muffenrohlings aus einer Anfangsposition, in welcher er von dem Rohr beabstandet ist, in eine Position, in welcher der Muffenrohling vollständig als Muffe in das Rohr eingeführt ist, nämlich: Vorschieben des Muffenrohlings mit langsamerer Geschwindigkeit, um Beschädigung des Muffenrohlings durch unerwünschte Berührung mit dem Rohrboden auszuschließen, bis der Muffenrohling in das Rohr eintritt, dann Vorschieben des Muffenrohlings in das Rohr mit größerer Geschwindigkeit, bis der Muffenrohling vollständig in das Rohr eingeführt ist.

3. Verfahren nach Anspruch 2 zum Vermuffen von Rohren, die geradlinig sind, mit dem Schritt des Herstellens einer Krümmung in dem Muffenrohling, bevor der Muffenrohling mit langsamer Geschwindigkeit vorgeschoben wird.

4. Verfahren nach Anspruch 1, wobei die Krümmung schwach aber wirksam ist, um das Einführen des Rohlings in das Rohr und die Befestigung des Rohlings in dem Rohr zu bewirken.

5. Verfahren nach Anspruch 1, wobei die Krümmung des Muffenrohlings durch Biegen des Muffenrohlings erzeugt wird, wobei ein Muffenrohling mit einer Länge von 100 cm (40 Zoll) um zwischen 0,1 cm und 0,25 cm (0,04 Zoll und 0,1 Zoll) an der Stelle maximaler Auslenkung ausgebogen wird.

6. Verfahren nach Anspruch 1, wobei der Muffenrohling mit langsamerer Geschwindigkeit zum Rohr hin vorgeschoben wird, bis der Muffenrohling in das Rohr eintritt, und anschließend mit wesentlich höherer Geschwindigkeit in das Rohr vorgeschoben wird, bis er vollständig in das Rohr eingesetzt ist.

**Revendications**

1. Procédé de manchonnage d'un tube endommagé dans un générateur de vapeur d'un réacteur nucléaire, ce tube étant rectiligne, procédé caractérisé en ce qu'on crée une courbure dans l'ébauche de fourreau en matière élastique à introduire dans le tube, la courbure étant suffisamment faible pour permettre l'introduction de l'ébauche dans le tube rectiligne, on engage une extrémité de l'ébauche et on fait avancer cette ébauche dans le tube par l'extrémité opposée de l'ébauche en appliquant une poussée suffisante à l'ébauche par l'extrémité introduite dans le tube malgré sa courbure de façon que l'ébauche forme un fourreau dans le tube et que la courbure de l'ébauche maintienne solidement le fourreau dans le tube en contrant les forces exercées par l'ébauche et en dégageant l'extrémité inférieure du fourreau.

2. Procédé selon la revendication 1, caractérisé en ce qu'en outre on fait avancer l'ébauche de fourreau d'une position initiale dans laquelle l'ébauche de fourreau est espacée du tube jusqu'à une position dans laquelle l'ébauche de fourreau est complètement introduite dans le tube, on fait avancer l'ébauche de fourreau à une vitesse plus faible pour éviter d'endommager l'ébauche de tube par le contact non souhaité avec la gaine du tube, jusqu'à ce que l'ébauche de fourreau ait pénétré dans le tube puis on fait avancer l'ébauche dans le tube à une vitesse plus grande jusqu'à ce que l'ébauche de fourreau soit complètement introduite dans le tube.

3. Procédé selon la revendication 2 pour manchonner des tubes rectilignes, procédé caractérisé en ce qu'on crée une courbure dans l'ébauche de fourreau avant de faire avancer cette ébauche de fourreau à faible vitesse.

4. Procédé selon la revendication 1, caractérisé en ce que la courbure est légère mais efficace pour permettre l'introduction de l'ébauche dans le tube et bloquer l'ébauches dans le tube.

5. Procédé selon la revendication 1, caractérisé en ce qu'on réalise la courbure de l'ébauche de fourreau en cintrant l'ébauche de fourreau dans le cas d'une ébauche de 100 cm (40 pouces) avec une flèche comprise entre 0,1 cm et 0,25 cm (0,040 pouces et 0,1 pouce) au point du maximum de la flèche.

6. Procédé selon la revendication 1, caractérisé en ce qu'on fait avancer l'ébauche de fourreau vers le tube à une vitesse faible jusqu'à ce que l'ébauche a commencé à pénétrer le tube puis on fait avancer l'ébauche dans le tube à une vitesse beaucoup plus importante jusqu'à la fin de son introduction dans le tube.

EP 0 152 778 B1

FIG. I

EP 0 152 778 B1

FIG. 2

FIG. 2A

FIG. 3

FIG. 4

FIG. 5

FIG. 6

FIG. 7

FIG. 8

FIG. 9

191

81

49

35

199

195

197

201

207

205 203

209 245 **FIG.10**

303

291

299 135

297 301

295

205 **FIG.11**

235

49

249

243

247 241

239

245

COMPUTER — CONTROL — INSERTION DRIVE

183 — 185 — 187

SIGNALING UNIT — 181

223

FIG. 12

179

177

81 — 27

153

451

29

161

175

37

27

FIG. 13

FIG. 14

FIG. 15

347 348

355

360

357

357

341

343

363 355

343 360

367 155

347

357 353

351 361 145

**FIG.17**

405

**FIG.16**

407

409 413